**Europäisches Patentamt**

**European Patent Office**

**Office européen des brevets**

(19)

(11) Numéro de publication: **0 206 965 B1**

(12)

# FASCICULE DE BREVET EUROPEEN

(45) Date de publication du fascicule du brevet:
**02.05.90**

(51) Int. Cl.⁴: **A01D 34/66**

(21) Numéro de dépôt: **86440047.8**

(22) Date de dépôt: **13.06.86**

(54) **Faucheuse rotative.**

(30) Priorité: **17.06.85  FR 8509292**

(43) Date de publication de la demande:
**30.12.86 Bulletin 86/52**

(45) Mention de la délivrance du brevet:
**02.05.90 Bulletin 90/18**

(84) Etats contractants désignés:
**AT DE GB IT NL SE**

(56) Documents cités:
**EP-A- 0 175 629**
**FR-A- 1 534 878**
**FR-A- 2 247 155**
**FR-A- 2 306 621**
**FR-A- 2 326 856**
**FR-A- 2 332 694**
**FR-A- 2 521 389**
**GB-A- 2 083 736**

(73) Titulaire: **KUHN S.A., 4, Impasse des Fabriques,
F-67700 Saverne(FR)**

(72) Inventeur: **Wolff, Michel, 18a, rue du Général Leclerc
Schwindratzheim, F-67270 Hochfelden(FR)**

ACTORUM AG

## Description

La présente invention concerne une faucheuse telle que décrite dans le préambule de la revendication 1.

Une telle faucheuse connue dans la FR-A 1 534 878. Cette faucheuse connue comporte deux organes de coupe rotatifs qui sont chacun formés par un support d'outils de coupe et par un certain nombre d'outils de coupe. Lesdits organes de coupe s'étendent au-dessus d'une poutre et sont chacun liés à l'extrémité supérieure d'un arbre correspondant dirigé vers le haut qui est guidé en rotation dans un palier correspondant lié à ladite poutre. L'entraînement en rotation des organes de coupe rotatifs se fait par le bas par des moyens d'entraînement logés dans la poutre. Ces moyens d'entraînement sont constitués par des poulies liées chacune à l'extrémité inférieure d'un arbre dirigé vers le haut correspondant et entraînées par une courroie correspondante. Ces moyens d'entraînement ne permettent pas d'assurer un entraînement synchrone des organes de coupe. En effet, les courroies peuvent glisser sur les poulies pendant le travail de la faucheuse lorsqu'un organe de coupe est freiné ou bloqué pendant un certain laps de temps pour une raison quelconque (obstacles, paquets de fourrage lourd, etc...). Or, on sait, lorsque la désynchronisation entre deux organes de coupe adjacents atteint une certaine valeur, qu'une collision entre deux outils de coupe peut entraîner la rupture, desdits outils de coupe ou de leur fixation. Compte tenu de la vitesse de rotation élevée des organes de coupe, un outil de coupe cassé ou arraché de son support d'outils de coupe peut provoquer des accidents graves sur des personnes qui se trouvent à proximité de la faucheuse ou même sur l'utilisateur de la machine. Par ailleurs, un organe de coupe qui est muni d'un outil de coupe cassé ou sur lequel manque un outil de coupe, réalise un travail non satisfaisant. Pour pallier à ce grave inconvénient, les deux organes de coupe tournent dans des plans de rotations différents. Ainsi, les outils de coupe des deux organes de coupe ne peuvent plus entrer en collision l'un avec l'autre, même si les positions desdits organes de coupe se sont désynchronisées. L'inconvénient de cette faucheuse connue réside dans le fait que l'espace de la partie supérieure de la poutre situé sous le support d'outils de coupe de l'organe de coupe tournant dans un plan de rotation haut, s'encrasse.

Or, cet encrassement de la partie supérieure de la poutre n'est pas acceptable. En effet, il peut gêner d'une part l'écoulement du fourrage coupé vers l'arrière et d'autre part, la coupe elle-même, s'il progresse vers l'avant dans la zone de travail des outils de coupe.

La présente invention a pour but de remédier à cet inconvénient de la faucheuse connue.

A cet effet, la faucheuse selon l'invention est caractérisée par le fait que le renflement couvre, en vue de dessus, sensiblement tout l'espace de la face supérieure de la poutre situé sous la trajectoire extrême balayée par le support d'outils de coupe de l'organe de coupe haut correspondant et, en partie au moins, l'espace de la face supérieure de la poutre non balayé par les outils de coupe d'un organe de coupe voisin tournant dans un plan de rotation bas.

Avec cet agencement, l'espace de la partie supérieure de la poutre situé sous le support d'outils de coupe de l'organe de coupe tournant dans un plan de rotation haut, de même qu'une partie au moins de l'espace de ladite partie supérieure de la poutre non balayé par les outils de coupe de l'organe de coupe voisin tournant dans un plan de rotation bas, ne peuvent plus s'encrasser. En effet, ceci résulte du fait que l'organe de coupe haut balaie continuellement durant sa rotation la face supérieure du renflement.

Les autres caractéristiques et avantages de l'invention ressortent des sous-revendications, ainsi que de la description ci-après d'un exemple non limitatif de réalisation de l'invention, représenté sur le dessin annexé sur lequel :

- La figure 1 représente une vue de dessus d'une barre de coupe d'une faucheuse selon l'invention,
- La figure 2 représente une vue en section de la barre de coupe de la figure 1 suivant le plan II (seule la poutre de ladite barre de coupe a été représentée en coupe),
- La figure 3 représente une vue en section de la barre de coupe de la figure 1 suivant le plan III (seule la poutre de ladite barre de coupe a été représentée en coupe), et
- La figure 4 représente une vue de dessus de la barre de coupe de la figure 1 légèrement modifiée, sur laquelle les organes de coupe ont été enlevés et dessinés en traits mixtes.

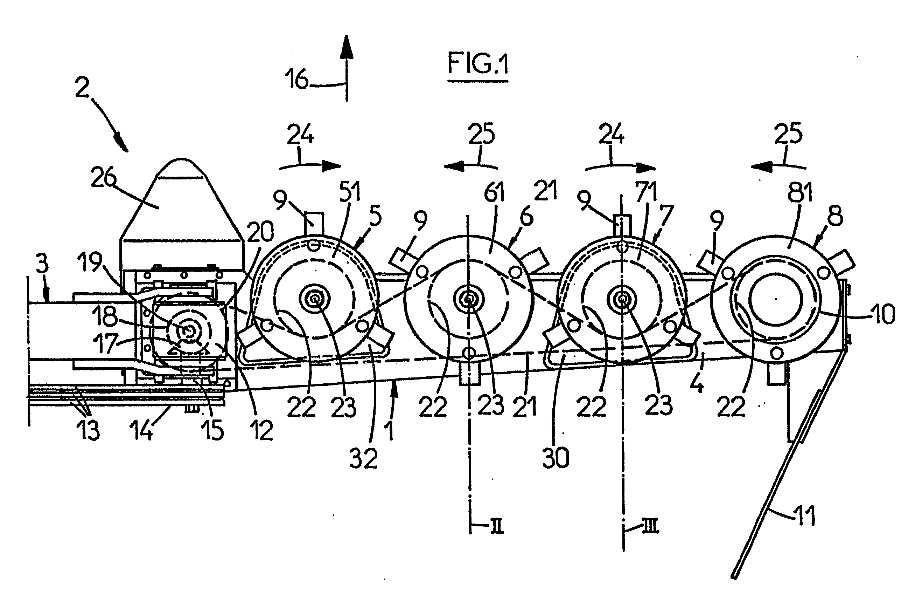

Sur la figure 1, on a représenté la barre de coupe (1) d'une faucheuse (2) selon l'invention. Cette faucheuse (2) comporte par ailleurs un mécanisme d'attelage (3) qui n'est que partiellement représenté et qui permet d'atteler la barre de coupe (1) à un tracteur agricole par exemple.

La barre de coupe (1) comporte une poutre (4) dans laquelle s'étendent des moyens d'entraînement des organes de coupe (5, 6, 7, 8). Les organes de coupe (5, 6, 7, 8) s'étendent à la partie supérieure de la poutre (4). Ils sont composés d'un support d'outils de coupe (51, 61, 71, 81) pourvu d'outils de coupe (9). L'organe de coupe (8) situé à l'extrémité de la barre de coupe (1) éloignée du mécanisme d'attelage (3), est surmonté par un dispositif d'andainage rotatif (10). Ce dispositif d'andainage (10) collabore avec un dispositif d'andainage fixe (11) pour réduire la largeur de l'andain de fourrage coupé déposé derrière la barre de coupe (1).

A l'extrémité de la barre de coupe (1) située du côté du mécanisme d'attelage (3), s'étend un carter de renvoi (12). Ce carter de renvoi (12) sert d'une part à relier la barre de coupe (1) au mécanisme d'attelage (3) et d'autre part à transmettre le mouvement depuis les courroies (13) jusqu'aux moyens d'entraînement s'étendant dans la poutre (4) de la barre de coupe (1). A cet effet, le carter de renvoi (12) comporte une poulie (14) sur laquelle s'enroulent les courroies (13) qui s'enroulent par ailleurs sur une autre poulie (non représentée) soutenue par le mécanisme d'attelage (3). Cette dernière poulie reçoit le mouvement de la prise de force du tracteur (non représenté) auquel est attelée la faucheuse, par l'intermédiaire d'un arbre de transmission (non représenté). La poulie (14) est calée sur un arbre d'entrée (15) qui s'étend sensiblement dans la direction de travail (16) et qui comporte à son extrémité s'étendant à l'intérieur du carter de renvoi (12), une roue dentée conique (17). La roue dentée conique (17) engrène avec une roue dentée conique (18) calée à l'extrémité supérieure d'un arbre intermédiaire (19). L'arbre intermédiaire (19) s'étend sensiblement perpendiculairement à l'arbre d'entrée (15) et sensiblement verticalement. A l'extrémité inférieure de l'arbre intermédiaire (19) est calée une roue motrice (20) qui s'étend perpendiculairement à l'arbre intermédiaire (19). Sur cette roue motrice (20) s'enroule un organe d'entraînement sans fin (21) qui attaque ensuite successivement une roue (22) placée sous chaque organe de coupe (5, 6, 7, 8) et calée sur l'arbre (23) supportant ledit organe de coupe (5, 6, 7, 8) correspondant. Après son enroulement sur la dernière roue (22), l'organe d'entraînement sans fin (21) retourne à la roue motrice (20). L'entraînement en rotation est réalisé de sorte que les organes de coupe (5, 6, 7, 8) tournent par exemple dans les sens indiqués par les flèches (24, 25).

Sous le carter de renvoi (12) est agencé un sabot (26) qui permet à cette extrémité de la barre de coupe (1) de glisser sur le sol et qui évite que du fourrage coupé ne puisse s'accrocher au carter de renvoi (12).

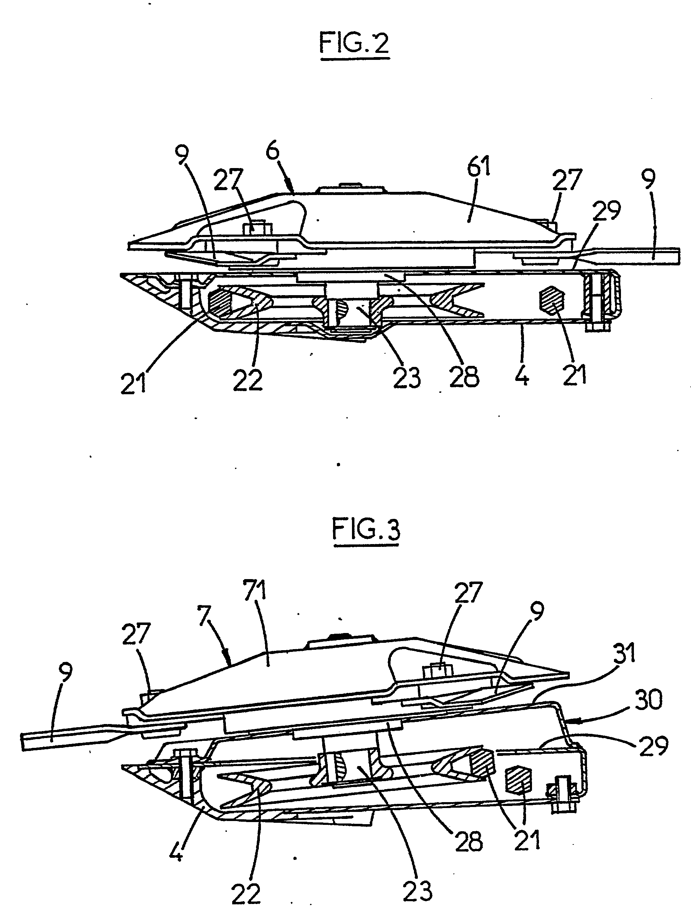

Tel qu'il sera visible sur les figures 2 et 3, les moyens d'entraînement (20, 21, 22) logés dans la poutre (4) ne peuvent pas empêcher que les organes de coupe (5, 6, 7, 8) se désynchronisent pendant le travail. Pour éviter que les outils de coupe (9) ne puissent alors entrer en collision, les organes de coupe (5, 7) tournent dans des plans de rotation différents et plus hauts que ceux dans lesquels tournent les organes de coupe (6, 8). Les outils de coupe (9) peuvent ainsi balayer des zones communes en vue en plan, sans que ces outils de coupe (9) ne puissent se toucher même s'ils balayent sensiblement en même temps lesdites zones après s'être désynchronisés.

La figure 2 montre l'agencement de l'organe de coupe bas (6). L'organe de coupe bas (6) est muni d'outils de coupe (9) qui sont liés au support d'outils de coupe (61) au moyen d'une liaison (27) permettant à chaque outil de coupe (9) de pivoter vers l'arrière et de se ranger sous le support d'outils de coupe (61) en cas de rencontre avec un obstacle.

L'organe de coupe (6) est fixé sur l'extrémité supérieure d'un arbre (23) dirigé vers le haut. L'arbre (23) est guidé en rotation dans un palier (28) fixé à la partie supérieure de la poutre (4).

A l'extrémité inférieure de l'arbre (23) qui s'étend à l'intérieur de la poutre (4), est calée la roue (22) servant à l'entraînement en rotation de l'organe de coupe (6).

Comme visible sur la figure 2, pendant la rotation de l'organe de coupe (6), les outils de coupe (9) tournent dans un plan de rotation s'étendant sensiblement parallèlement à la face supérieure (29) de la poutre (4) et relativement près de cette face supérieure (29).

La description qui vient d'être faite, de l'agencement de l'organe de coupe bas (6), est également valable pour l'organe de coupe bas (8).

La figure 3 montre l'agencement de l'organe de coupe haut (7). Cet organe de coupe haut (7) est également muni d'outils de coupe (9) qui sont liés au support d'outils de coupe (71) au moyen d'une liaison (27) permettant à chaque outil de coupe (9) de pivoter vers l'arrière et de se ranger sous le support d'outils de coupe (71) en cas de rencontre avec un obstacle.

L'organe de coupe haut (7) est par ailleurs également fixé sur l'extrémité supérieure d'un arbre (23) dirigé vers le haut. Cet arbre (23) est aussi guidé en rotation dans un palier (28) fixé à la partie supérieure de la poutre (4).

A l'extrémité inférieure de l'arbre (23) qui s'étend à l'intérieur de la poutre (4), est calée la roue (22) servant à l'entraînement en rotation de l'organe de coupe haut (7).

Alors que, dans le cas de la figure 2 qui montre l'organe de coupe bas (6), l'arbre (23) est sensiblement perpendiculaire à la face supérieure (29) de la poutre (4), dans le cas de la figure 3, qui montre l'organe de coupe haut (7), l'arbre (23) est incliné vers l'avant par rapport à ladite face supérieure (29) de la poutre (4). en sus, l'arbre (23) de l'organe de coupe haut (7) s'étend plus haut par rapport à ladite face supérieure (29) de la poutre (4) que l'arbre (23) de l'organe de coupe bas (6).

Cette position de l'arbre (23) de l'organe de coupe haut (7) est définie par un renflement (30) que comporte la partie supérieure de la poutre (4).

La face supérieure (31) de ce renflement (30) est sensiblement plane et s'étend sensiblement parallèlement au plan de rotation des outils de coupe (9). Par ailleurs, le plan de rotation des outils de coupe (9) s'étend relativement près de la face supérieure (31) du renflement (30) et, avantageusement, à une distance sensiblement égale à celle à laquelle s'étend le plan de rotation des outils de coupe (9) des organes de coupe bas (6, 8) par rapport à la face supérieure (29) de la poutre (4).

Comme visible sur la figure 3, la face supérieure (31) du renflement (30) est inclinée vers l'avant.

La description qui vient d'être faite de l'agencement de l'organe de coupe haut (7) est également valable pour l'organe de coupe haut (5) sous lequel s'étend un renflement (32) qui a, en coupe, sensiblement la même forme que le renflement (30) qui s'étend sous l'organe de coupe haut (7).

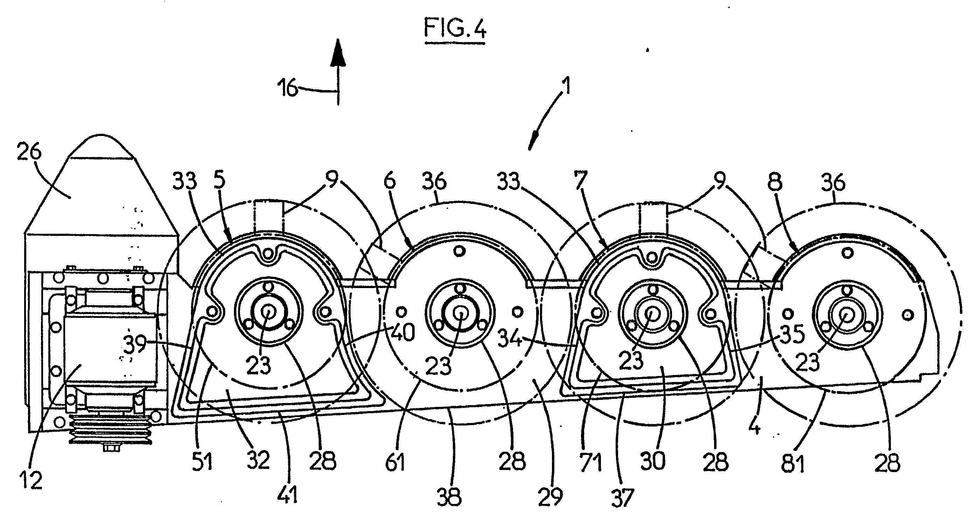

La figure 4 montre la barre de coupe (1) de la figure 1 sur laquelle les organes de coupe (5, 6, 7, 8) ont été figurés en traits mixtes pour que la partie supérieure de la poutre (4) soit bien visible.

Sur cette figure, on voit la forme des renflements (30, 32) vus en plan. Ces renflements (30, 32) s'étendent sous les organes de coupe hauts (5, 7) et couvrent sensiblement l'espace de la face supérieure (29) de la poutre (4) situé sous les supports d'outils de coupe (51, 71) des organes de coupe hauts (5, 7).

Le bord avant (33) desdits renflements (30, 32) est sensiblement circulaire. En sus, ce bord avant (33) s'étend sensiblement sous la trajectoire extrême balayée par le support d'outils de coupe (51, 71) de l'organe de coupe haut (5, 7) sous lequel est agencé ledit renflement et avantageusement légèrement en retrait de ladite trajectoire.

Les bords latéraux (34, 35) du renflement (30) agencé sous l'organe de coupe haut (7) situé le plus loin du carter de renvoi (12), s'étendent en partie au moins sensiblement tangentiellement à la trajectoire extrême (36) balayée par les outils de coupe (9) des organes de coupe bas (6, 8) qui entourent ledit organe de coupe haut (7).

En sus, lesdits bords latéraux (34, 35) divergent vers l'arrière, compte tenu de sens de travail (16) et s'écartent sensiblement symétriquement par rapport à un plan vertical sensiblement dirigé dans la direction de travail (16) et passant sensiblement par l'axe longitudinal de l'arbre (23) de l'organe de coupe haut (7).

A l'arrière, le bord arrière (37) du renflement (30) épouse sensiblement le bord arrière (38) de la poutre (4).

Avec cette forme, on voit que le renflement (30) est en vue de dessus, sensiblement symétrique par rapport au plan vertical sensiblement parallèle à la direction de travail (16) et passant sensiblement par l'axe longitudinal de l'arbre (23) de l'organe de coupe haut (7).

En ce qui concerne le renflement (32) agencé sous l'organe de coupe haut (5) situé près du carter de renvoi (12), son bord latéral (39) situé en regard dudit carter de renvoi (12), est sensiblement parallèle au bord latéral (34) du renflement (30) situé sous l'organe de coupe haut (7) le plus éloigné du carter de renvoi (12).

Son bord latéral (40), s'étendant en regard de l'organe de coupe bas (6) adjacent, a par contre une forme sensiblement différente. On voit en effet sur la figure 4 que le bord latéral (40) du renflement (32) épouse, en partie au moins et notamment vers l'arrière, sensiblement la trajectoire extrême (36) balayée par les outils de coupe (9) de l'organe de coupe bas (6) voisin.

Le bord arrière (41) de ce renflement (32) épouse également sensiblement le bord arrière (38) de la poutre (4).

Grâce à cette forme qui vient d'être décrite, les renflements (30, 32) couvrent également en partie au moins l'espace de la face supérieure (29) de la poutre (4) non balayé par les outils de coupe (9) des organes de coupe bas (6, 8).

La machine qui vient d'être décrite fonctionne de la manière suivante.

Au travail, elle est attelée à un tracteur agricole à l'aide du mécanisme d'attelage (3). La prise de force du tracteur (non représenté) entraîne la poulie (14) par l'intermédiaire d'un arbre de transmission (non représenté) qui attaque une première poulie (non représentée), laquelle entraîne la poulie (14) par l'intermédiaire des courroies (13).

La poulie (14) entraîne alors la roue motrice (20) par l'intermédiaire de l'arbre d'entrée (15), des roues dentées (17 et 18) et de l'arbre intermédiaire (19). La distribution du mouvement aux divers organes de coupe (5, 6, 7, 8) se fait alors grâce à l'organe d'entraînement sans fin (21) qui attaque les roues (22).

En tournant, les outils de coupe (9) s'étendent radialement vers l'extérieur sous l'effet de la force centrifuge et coupent alors le fourrage au fur et à mesure que la faucheuse avance dans le sens de travail (16).

Pendant le travail, il peut arriver que les outils de coupe (9) entrent en contact avec de la terre. Cette terre mélangée à des débris végétaux est alors véhiculée vers l'arrière par les outils de coupe (9).

Comme les outils de coupe (9) des organes de coupe bas (6, 8) tournent dans un plan de rotation qui s'étend très près de la face supérieure (29) de la poutre (4), cette terre véhiculée par les outils de coupe (9) ne peut pas se coller à ladite face supérieure de la poutre, et elle est alors évacuée et déposée derrière la barre de coupe par lesdits outils de coupe (9).

Dans le cas des organes de coupe hauts (5, 7) et grâce à l'agencement des renflements (30, 32) selon l'invention, il se produit le même phénomène. En effet, la face supérieure (31) des renflements (30, 32) s'étend très près du plan de rotation des outils de coupe (9) des organes de coupe hauts (5, 7), de sorte que là aussi, la terre véhiculée par les outils de coupe (9) ne peut pas se coller à la face supérieure des renflements, et elle est alors également évacuée et déposée derrière la barre de coupe par les outils de coupe (9).

La partie supérieure de la poutre de la faucheuse selon l'invention reste ainsi toujours relativement propre.

Dans le cadre de l'invention, il sera parfaitement possible de faire épouser aux bords (34 et 35) du renflement (30), la trajectoire extrême (36) des outils de coupe (9) des organes de coupe bas (6, 8) voisins, comme le fait le bord (40) du renflement (32).

De même, il sera possible, dans le cadre de l'invention, que le bord (40) du renflement (32) s'étende sensiblement tangentiellement à la trajectoire extrême (36) des outils de coupe (9) de l'organe de coupe bas (6) voisin.

Par ailleurs, il sera aussi possible dans l'invention d'avoir le renflement (32) sensiblement identique au renflement (30) (figure 1). Le prix de la barre de coupe s'en trouvera ainsi abaissé puisqu'il n'y aura qu'un seul type de renflement à fabriquer.

En sus, les moyens d'entraînement qui ne peuvent pas assurer un entraînement en rotation synchrone des organes de coupe (5, 6, 7, 8) peuvent être différents de ceux décrits. Ils peuvent par exemple être constitués de moteurs électriques, hydrauliques, pneumatiques, etc...

**Revendications**

1. Faucheuse (2) munie d'au moins deux organes de coupe rotatifs (5, 6, 7, 8) formés chacun par un support d'outils de coupe (51, 61, 71, 81) et par un certain nombre d'outils de coupe (9), lesdits organes de coupe rotatifs (5, 6, 7, 8), disposés au-dessus d'une poutre (4) et tournant dans des plans de rotation différents étant chacun lié à un arbre (23) correspondant dirigé vers le haut qui est guidé en rotation dans un palier (28) fixé à ladite poutre (4), au moins un desdits organes de coupe rotatifs (5, 6, 7, 8) étant entraîné par des moyens d'entraînement (20, 21, 22) supportés par ladite poutre (4), la partie supérieure de laquelle comportant sous un organe de coupe rotatif (5, 7) qui tourne dans un plan de rotation haut, un renflement (32, 30), dont la face supérieure (31) est sensiblement plane et s'étend sensiblement parallèlement audit plan de rotation haut, caractérisée par le fait que ledit renflement (32, 30) couvre, en vue de dessus sensiblement tout l'espace de la face supérieure (29) de la poutre (4) situé sous la trajectoire extrême balayée par le support d'outils de coupe (51, 71) de l'organe de coupe haut (5, 7) correspondant et, en partie au moins, l'espace de la face supérieure (29) de la poutre (4) non balayé par les outils de coupe (9) d'un organe de coupe bas (6, 8) voisin tournant dans un plan de rotation bas.

2. Faucheuse selon la revendication 1, caractérisée par le fait que le bord avant (33) d'un renflement (30, 32) est, en vue de dessus, sensiblement circulaire.

3. Faucheuse selon l'une au moins des revendication 1 ou 2, caractérisée par le fait que le bord avant (33) d'un renflement (30, 32) épouse, en vue de dessus, sensiblement la trajectoire extrême balayée par le support d'outils de coupe (51, 71) de l'organe de coupe haut (5, 7) correspondant.

4. Faucheuse selon la revendication 3, caractérisée par le fait que le bord avant (33) d'un renflement (30, 32) s'étend, en vue de dessus, légèrement en retrait par rapport à la trajectoire extrême balayée par le support d'outils de coupe (51, 71) de l'organe de coupe haut (5, 7) correspondant.

5. Faucheuse selon l'une au moins des revendications précédentes, caractérisée par le fait que le bord latéral (34, 35, 40) d'un renflement (30, 32) situé en regard d'un organe de coupe bas (6, 8) voisin, s'étend en partie au moins, sensiblement tangentiellement à la trajectoire extrême (36) balayée par les outils de coupe (9) dudit organe de coupe bas (6, 8) voisin.

6. Faucheuse selon la revendication 5, caractérisée par le fait que le bord latéral (40) d'un renflement (32) situé en regard d'un organe de coupe bas (6) voisin, épouse en partie au moins sensiblement la trajectoire extrême (36) balayée par les outils de coupe (9) dudit organe de coupe bas (6) voisin.

7. Faucheuse selon l'une au moins des revendications précédentes, caractérisée par le fait que le bord latéral (34, 35, 40) d'un renflement (30, 32) situé en regard d'un organe de coupe bas (6, 8) voisin, s'écarte, vers l'arrière, du plan vertical parallèle à la direction de travail (16) et passant par l'axe longitudinal de l'arbre (23) de l'organe de coupe haut (5, 7) correspondant.

8. Faucheuse selon l'une au moins des revendications précédentes, caractérisée par le fait qu'un organe de coupe haut (7) s'étend entre deux organes de coupe bas (6, 8), et que le renflement (30) correspondant audit organe de coupe haut (7), est, en vue de dessus, sensiblement symétrique par rapport au plan vertical parallèle à la direction de travail (16) et passant par l'axe longitudinal de l'arbre (23) dudit organe de coupe haut (7).

9. Faucheuse selon la revendication 8, caractérisée par le fait que les bords latéraux (34, 35) du renflement (30) divergent vers l'arrière et s'écartent sensiblement symétriquement du plan vertical parallèle à la direction de travail (16) et passant par l'axe longitudinal de l'arbre (23) de l'organe de coupe haut (7) correspondant.

10. Faucheuse selon l'une au moins des revendications précédentes, caractérisée par le fait que le bord arrière (37, 41) du renflement (30, 32) épouse sensiblement le bord arrière (38) de la poutre (4).

11. Faucheuse selon l'une au moins des revendications précédentes, caractérisée par le fait que la partie supérieure de la poutre (4) comporte plusieurs renflements (30, 32) et que tous ces renflements (30, 32) sont sensiblement identiques.

12. Faucheuse selon l'une au moins des revendications précédentes, caractérisée par le fait que la face supérieure (31) du renflement (30, 32) détermine le plan de rotation haut dans lequel tourne l'organe de coupe haut (7, 5) correspondant.

**Claims**

1. A mower (2) equipped with at least two rotating cutting members (5, 6, 7, 8), each formed by a cutting tool support (51, 61, 71, 81) and by a certain number of cutting tools (9), the said rotating cutting members (5, 6, 7, 8) arranged above a beam (4) and rotating in different planes of rotation, each being connected to a corresponding upwardly directed shaft (23) which is guided in rotation in a bearing (28) fixed to the said beam (4), at least one of the said rotating cutting members (5, 6, 7, 8) being driven by drive means (20, 21, 22) supported by the said beam (4), the upper part of which comprises, beneath a rotating cutting member (5, 7) which rotates in a high plane of rotation, a bulge (32, 30), the upper surface (31) of which is substantially flat and extends substantially in parallel to the said high plane of rotation, characterised in that the said bulge (32, 30), when viewed from above, substantially covers the entire area of the upper surface (29) of the beam (4) located beneath the maximum trajectory swept by the cutting tool support (51, 71) of the corresponding high cutting member (5, 7) and, at least in part, the area of the upper surface (29) of the beam (4) which is not swept by the cutting tools (9) of an adjacent low cutting member (6, 8) rotating in a low plane of rotation.

2. A mower as claimed in claim 1, characterised in that the front edge (33) of a bulge (30, 32) is substantially circular when viewed from above.

3. A mower as claimed in at least one of the Claims 1 or 2, characterised in that the front edge (33) of a bulge (30, 32) substantially coincides, when viewed from above, with the maximum trajectory swept by the cutting tool support (51, 71) of the corresponding high cutting member (5, 7).

4. A mower as claimed in claim 3, characterised in that the front edge (33) of a bulge (30, 32), when viewed from above, is slightly set-back in relation to the maximum trajectory swept by the cutting tool support (51, 71) of the corresponding high cutting member (5, 7).

5. A mower as claimed in at least one of the preceding claims, characterised in that the lateral edge (34, 35, 40) of a bulge (30, 32) located opposite an adjacent low cutting member (6, 8), extends, at least in part, substantially tangentially to the maximum trajectory (36) swept by the cutting tools (9) of the said adjacent low cutting member (6, 8).

6. A mower as claimed in Claim 5, characterised in that the lateral edge (40) of a bulge (32) located opposite an adjacent low cutting member (6) substantially coincides, at least in part, with the maximum trajectory (36) swept by the cutting tools (9) of the said adjacent low cutting member (6).

7. A mower as claimed in at least one of the preceding claims, characterised in that the lateral edge (34, 35, 40) of a bulge (30, 32) located opposite an adjacent low cutting member (6, 8) diverges rearwards from the vertical plane parallel to the direction of work (16) and passing through the longitudinal axis of the shaft (23) of the corresponding high cutting member (5, 7).

8. A mower as claimed in at least one of the preceding claims, characterised in that a high cutting member (7) extends between two low cutting members (6, 8) and that the bulge (30) corresponding to the said high cutting member (7) is substantially symmetrical, when viewed from above, in relation to the vertical plane parallel to the direction of work (16) and passing through the longitudinal axis of the shaft (23) of the said high cutting member (7).

9. A mower as claimed in claim 8, characterised in that the lateral edges (34, 35) of the bulge (30) diverge rearwards and in a substantially symmetrical fashion from the vertical plane parallel to the direction of work (16) and passing through the longitudinal axis of the shaft (23) of the corresponding high cutting member (7).

10. A mower as claimed in at least one of the preceding claims, characterised in that the rear edge (37, 41) of the bulge (30, 32) substantially coincides with the rear edge (38) of the beam (4).

11. A mower as claimed in at least one of the preceding claims, characterised in that the upper part of the beam (4) comprises a plurality of bulges (30, 32) and that all the bulges (30, 32) are substantially identical.

12. A mower as claimed in at least one of the preceding claims, characterised in that the upper surface (31) of the bulge (30, 32) determines the high plane of rotation in which the corresponding high cutting member (7, 5) rotates.

## Patentansprüche

1. Mähmaschine (2) mit zumindest zwei rotierenden Schneidorganen (5, 6, 7, 8), die jeweils aus einem Schneidwerkzeugträger (51, 61, 71, 81) und aus einer gewissen Anzahl von Schneidwerkzeugen (9) bestehen, wobei die rotierenden Schneidorgane (5, 6, 7, 8), die oberhalb eines Trägers (4) angeordnet sind und in unterschiedlichen Rotationsebenen rotieren, jeweils mit einer entsprechenden aufrecht stehenden Welle (23) verbunden sind, die in einem an dem Träger (4) befestigten Lager (28) drehbar geführt ist, und wobei zumindest eines der rotierenden Schneidorgane (5, 6, 7, 8) durch Antriebsmittel (20, 21, 22) angetrieben wird, die auf dem Träger (4) abgestützt sind dessen oberer Teil unter einem rotierenden Schneidorgan (5, 7), das in einer oberen Rotationsebene rotiert, einen Aufsatz (32, 30) aufweist, dessen obere Fläche (31) im wesentlichen eben ist und sich im wesentlichen parallel zur oberen Rotationsebene erstreckt, dadurch gekennzeichnet, daß der Aufsatz (32, 30) in Draufsicht im wesentlichen den ganzen Bereich der Oberseite (29) des Trägers (4), der sich unter der äußersten vom Schneidwerkzeugträger (51, 71) des entsprechenden oberen Schneidorgans (5, 7) bestrichenen Bewegungsbahn erstreckt und zumindest teilweise den Bereich der Oberseite (29) des Trägers (4) bedeckt, der nicht von den Schneidwerkzeugen (9) eines benachbarten unteren Schneidorgans (6, 8), das in einer unteren Rotationsebene rotiert, bestrichen wird.

2. Mähmaschine nach Anspruch 1, dadurch gekennzeichnet, daß der vordere Rand (33) eines Aufsatzes (30, 32) in Draufsicht im wesentlichen kreisrund ist.

3. Mähmaschine nach zumindest einem der Ansprüche 1 oder 2, dadurch gekennzeichnet, daß der vordere Rand (33) eines Aufsatzes (30, 32) in Draufsicht im wesentlichen der äußersten vom Schneidwerkzeugträger (51, 71) des entsprechenden oberen Schneidorgans (5, 7) bestrichenen Bewegungsbahn angepaßt ist.

4. Mähmaschine nach Anspruch 3, dadurch gekennzeichnet, daß der vordere Rand (33) eines Aufsatzes (30, 32) in Draufsicht gegenüber der äußersten vom Schneidwerkzeugträger (51, 71) des entsprechenden oberen Schneidorgans (5, 7) bestrichenen Bewegungsbahn leicht zurückversetzt ist.

5. Mähmaschine nach zumindest einem der vorhergehenden Ansprüche, dadurch gekennzeichnet, daß sich der einem benachbarten unteren Schneidorgan (6, 8) zugekehrte seitliche Rand (34, 35, 40) eines Aufsatzes (30, 32) zumindest teilweise etwa tangential zur äußersten von den Schneidwerkzeugen (9) dieses benachbarten unteren Schneidorgans (6, 8) bestrichenen Bewegungsbahn (36) erstreckt.

6. Mähmaschine nach Anspruch 5, dadurch gekennzeichnet, daß der einem benachbarten unteren Schneidorgan (6) zugekehrte seitliche Rand (40) eines Aufsatzes (32) zumindest teilweise im wesentlichen an die äußerste von den Schneidwerkzeugen (9) dieses benachbarten unteren Schneidorgans (6) bestrichene Bewegungsbahn (36) angepaßt ist.

7. Mähmaschine nach zumindest einem der vorhergehenden Ansprüche, dadurch gekennzeichnet, daß sich der einem benachbarten unteren Schneidorgan (6, 8) zugekehrte seitliche Rand (34, 35, 40) eines Aufsatzes (30, 32) von der zur Arbeitsrichtung (16) parallelen und durch die Längsachse der Welle (23) des entsprechenden oberen Schneidorgans (5, 7) gehende Vertikalebene nach hinten entfernt.

8. Mähmaschine nach zumindest einem der vorhergehenden Ansprüche, dadurch gekennzeichnet, daß sich ein oberes Schneidorgan (7) zwischen zwei unteren Schneidorganen (6, 8) befindet und daß der entsprechende Aufsatz (30) in Draufsicht im wesentlichen symmetrisch in bezug auf die zur Arbeitsrichtung (16) parallele und durch die Längsachse der Welle (23) dieses oberen Schneidorgans (7) gehende Vertikalebene ist.

9. Mähmaschine nach Anspruch 8, dadurch gekennzeichnet, daß die seitlichen Ränder (34, 35) des Aufsatzes (30) nach hinten zu auseinanderlaufen und sich im wesentlichen symmetrisch von der zur Arbeitsrichtung (16) parallelen und durch die Längsachse der Welle (23) des entsprechenden oberen Schneidorgans (7) gehenden Vertikalebene entfernen.

10. Mähmaschine nach zumindest einem der vorhergehenden Ansprüche, dadurch gekennzeichnet, daß der hintere Rand (37, 41) des Aufsatzes (30, 32) im wesentlichen dem hinteren Rand (38) des Trägers (4) angepaßt ist.

11. Mähmaschine nach zumindest einem der vorhergehenden Ansprüche, dadurch gekennzeichnet, daß der Oberteil des Trägers (4) mehrere Aufsätze (30, 32) trägt und daß alle Aufsätze (30, 32) im wesentlichen gleich sind.

12. Mähmaschine nach zumindest einem der vorhergehenden Ansprüche, dadurch gekennzeichnet, daß die Oberseite (31) des Aufsatzes (30, 32) die obere Rotationsebene bestimmt, in welcher das entsprechende obere Schneidorgan (7, 5) rotiert.

FIG.1

EP 0 206 965 B1

## FIG.2

## FIG.3

FIG.4

EP 0 206 965 B1